(19) Europäisches Patentamt
European Patent Office
Office européen des brevets

(11) EP 2 782 964 B1

(12) EUROPÄISCHE PATENTSCHRIFT

(45) Veröffentlichungstag und Bekanntmachung des Hinweises auf die Patenterteilung:
**11.04.2018 Patentblatt 2018/15**

(21) Anmeldenummer: **12784016.3**

(22) Anmeldetag: **14.11.2012**

(51) Int Cl.:
***C08L 77/00*** (2006.01) ***C08L 23/08*** (2006.01)
***C08L 25/08*** (2006.01) ***C08L 25/16*** (2006.01)
***C08L 35/06*** (2006.01) ***C08K 3/08*** (2006.01)
***C08K 3/16*** (2006.01) ***C08K 3/32*** (2006.01)
***C08L 79/02*** (2006.01)

(86) Internationale Anmeldenummer:
**PCT/EP2012/072531**

(87) Internationale Veröffentlichungsnummer:
**WO 2013/075982 (30.05.2013 Gazette 2013/22)**

(54) **BLASFORMBARE POLYAMIDFORMMASSEN**

BLOW-MOULDABLE POLYAMIDE COMPOUNDS

MATIÈRES POLYAMIDES MOULABLES PAR SOUFFLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2011 EP 11190751**

(43) Veröffentlichungstag der Anmeldung:
**01.10.2014 Patentblatt 2014/40**

(73) Patentinhaber: **BASF SE**
**67056 Ludwigshafen am Rhein (DE)**

(72) Erfinder:
- **GABRIEL, Claus**
  **64347 Griesheim (DE)**
- **PRUSTY, Manoranjan**
  **68167 Mannheim (DE)**
- **BAUMERT, Martin**
  **Singapore 275981 (SG)**
- **GÜNTHERBERG, Norbert**
  **67346 Speyer (DE)**

(74) Vertreter: **BASF IP Association**
**BASF SE**
**G-FLP-C006**
**67056 Ludwigshafen (DE)**

(56) Entgegenhaltungen:
**WO-A1-95/20011**
**WO-A1-2011/051123**
**DE-A1- 2 204 495**
**US-A- 2 705 227**
**US-A- 5 122 570**
**US-A1- 2008 146 718**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 782 964 B1

**Beschreibung**

Die Erfindung betrifft thermoplastische Formmassen enthaltend

A) 10 bis 94 Gew.-% eines Polyamids,
B) 1 bis 30 Gew.-% eines Copolymerisates I aus

$B_1$) 35 bis 89,9 Gew.-% Ethylen
$B_2$) 10 bis 60 Gew.-% 1-Octen oder 1-Buten oder Propylen oder deren Mischungen und
$B_3$) 0,05 bis 5 Gew.-% funktioneller Monomere, wobei die funktionellen Monomeren ausgewählt sind aus der Gruppe der Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen oder deren Mischungen,

oder eines Copolymerisates II aus

$B_1$) 50 bis 98 Gew.-% Ethylen
$B_4$) 2 bis 50 Gew.-% Acrylsäure oder Methacrylsäure oder (Meth)Acrylates mit 1 bis 18 C-Atomen, oder
$B_5$) 0 bis 20 Gew.-% funktioneller Monomerer ausgewählt aus der Gruppe der Carbonsäureanhydrid- oder Epoxidgruppen oder deren Mischungen,

oder deren Mischungen.
C) 0,1 bis 10 Gew.-% eines Copolymerisates aus

$C_1$) 50 bis 95 Gew.-% Styrol oder substituierten Styrolen der allgemeinen Formel I oder deren Mischungen

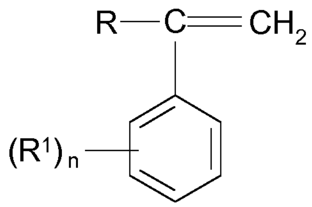

I

worin R einen Alkylrest mit 1 bis 8 C-Atomen oder ein Wasserstoffatom und $R^1$ einen Alkylrest mit 1 bis 8 C-Atomen darstellen und n den Wert 0, 1, 2 oder 3 hat und

$C_2$) 5 bis 50 Gew.-% von einem oder mehreren Dicarbonsäureanhydriden abgeleitete Struktureinheiten,

D) 0,001 bis 20 Gew.-% Eisenpulver,
E) 0,05 bis 3 Gew.-% eines kupferhaltigen Stabilisators,
F) 100 ppm bis 5 Gew.-% Alkalimetallsalze oder Erdalkalimetallsalze von Sauerstoffsäuren des Phosphors oder deren Mischungen,
G) 0 bis 2 Gew.-% eines Polyethylenimin-Homopolymerisates oder -Copolymerisates,
H) 0 bis 60 Gew.-% weiterer Zusatzstoffe,

wobei die Summe der Gewichtsprozente A) bis H) 100 % ergibt.

Außerdem betrifft die vorliegende Erfindung die Verwendung derartiger Formmassen zur Herstellung von Formkörpern jeglicher Art und die hierbei erhältlichen Formkörper, vorzugsweise Kfz-Innenteile jeglicher Art.

Thermoplastische Polyamide wie PA6 und PA66 werden häufig in Form von glasfaserverstärkten Formmassen als Konstruktionswerkstoffe für Bauteile, die während ihrer Lebensdauer erhöhten Temperaturen ausgesetzt sind, eingesetzt, wobei es zu thermooxidativen Schädigungen kommt. Durch Zusatz von bekannten Wärmestabilisatoren kann das Auftreten der thermooxidativen Schädigung zwar hinausgezögert nicht aber dauerhaft verhindert werden, was sich z.B. in einem Abfallen der mechanischen Kennwerte äußert. Die Verbesserung der Wärmealterungsbeständigkeit (WAB) von Polyamiden ist überaus wünschenswert, da dadurch längere Lebenszeiten für thermisch belastete Bauteile erreicht werden können, bzw. deren Ausfallrisiko gesenkt werden kann. Alternativ kann eine verbesserte WAB auch den Einsatz der Bauteile bei höheren Temperaturen ermöglichen.

Der Einsatz von elementarem Eisenpulver in Polyamiden ist aus den DE-A 26 02 449 , JP-A 09/221590 , JP-A 2000/86889 (jeweils als Füllstoff), JP-A 2000/256 123 (als Dekorzusatz) sowie WO 2006/074912 und WO 2005/007727

(Stabilisatoren) bekannt.

Weitere Kombinationen von speziellen Eisenpulvern mit anderen Stabilisatoren sind aus den WO 2011/051123, WO 2011/051121 und WO 2010/076145 bekannt.

Die Oberfläche der Formkörper ist verbesserungsbedürftig, da bei der Wärmealterung sich poröse Stellen bilden sowie Blasenbildung erfolgt.

Die oben genannten Additive führen zu einem Molekulargewichtsabbau, der die Verarbeitung mittels Spritzguß erleichtert.

Für die Herstellung von Blasformkörpern sind die bekannten Formmassen nicht geeignet, da insbesondere die Schmelzestabilität nicht ausreichend ist.

Blasformbare Polyamidformmassen sind aus den US 4,966,941, EP-A 295 906, CA 1,323,953, WO 95/20011, US 5,122,570 sowie DE-A 10042176 bekannt.

Die WAB und Schmelzestabilität sind jedoch nicht zufriedenstellend.

Der vorliegenden Erfindung lag daher die Aufgabe zugrunde, thermoplastische, blasformbare Polyamidformmassen zur Verfügung zu stellen, welche eine verbesserte WAB und eine gute Oberfläche nach Wärmealterung sowie Mechanik aufweisen. Insbesondere Schmelzestabilität beim Blasformen und die Oberfläche von Blasformkörpern sollte verbessert sein.

Unter Schmelzestabilität soll sowohl die Schmelzefestigkeit als auch die thermische Stabilität (Molmassenveränderung über definierte Zeiträume) verstanden werden.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 10 bis 94, vorzugsweise 20 bis 94 und insbesondere 30 bis 94 Gew.-%, ganz besonders bevorzugt 30 bis 88 Gew.-% mindestens eines Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-%igen Lösung in 96 gew.-%iger Schwefelsäure bei 25°C gemäß ISO 307. Insbesondere bevorzugt sind Polyamide mit einer VZ größer 150, vorzugsweise größer 165 ml/g.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid® X17 der BASF SE, ein 1 : 1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid®C33 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/6I/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

AB-Polymere:

| | |
|---|---|
| PA 4 | Pyrrolidon |
| PA 6 | ε-caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

AA/BB-Polymere

| | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA 9T | 1,9-nonanediamin, Terephthalsäure |
| PA MXD6 | m-Xylylendiamin, Adipinsäure |

AA/BB-Polymere

| | |
|---|---|
| PA 6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | Wie PA 6I/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Als Komponente B) enthalten die erfindungsgemäßen Formmassen 1 bis 30, bevorzugt 5 bis 25 und insbesondere 10 bis 25 Gew.-% eines Schlagzähmodifiers (oft auch Kautschuk, oder kautschukelastisches Polymerisat genannt) aus einem Copolymerisat I aufgebaut aus

$B_1$) 35 bis 89,9 Gew.-% Ethylen
$B_2$) 10 bis 60 Gew.-% 1-Octen oder 1-Buten oder Propylen oder deren Mischungen und
$B_3$) 0,05 bis 5 Gew.-% funktioneller Monomere, wobei die funktionellen Monomeren ausgewählt sind aus der Gruppe der Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen oder deren Mischungen,

oder einem Copolymerisat II aus

$B_1$) 50 bis 98 Gew.-% Ethylen
$B_4$) 2 bis 50 Gew.-% Acrylsäure oder Methacrylsäure oder (Meth)Acrylates mit 1 bis 18 C-Atomen, oder
$B_5$) 0 bis 20 Gew.-% funktioneller Monomerer ausgewählt aus der Gruppe der Carbonsäureanhydrid- oder Epoxidgruppen oder deren Mischungen,

oder deren Mischungen.

Der Anteil der funktionellen Gruppen $B_3$) beträgt 0,05 bis 5, vorzugsweise 0,2 bis 4 und insbesondere 0,3 bis 3,5 Gew.-%, bezogen auf 100 Gew.-% B).

Besonders bevorzugte Komponenten $B_3$) sind aus einer ethylenisch ungesättigten Mono- oder Dicarbonsäure

oder einem funktionellen Derivat einer solchen Säure aufgebaut.

Grundsätzlich eignen sich alle primären, sekundären und tertiären $C_1$-$C_{18}$-Alkylester der Acrylsäure oder Methacrylsäure, doch werden Ester mit 1 - 12 C-Atomen, insbesondere mit 2 - 10 C-Atomen bevorzugt.

Beispiele hierfür sind Methyl-, Ethyl-, Propyl-, n-, i-Butyl- und t-Butyl-, 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Anstelle der Ester oder zusätzlich zu diesen können in den Olefinpolymerisaten auch säurefunktionelle und/oder latent säurefunktionelle Monomere ethylenisch ungesättigter Mono- oder Dicarbonsäuren oder Epoxygruppen aufweisende Monomere enthalten sein.
Als weitere Beispiele für Monomere $B_3$) seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre $C_1$-$C_{12}$-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppenenthaltenden Monomeren werden vorzugsweise durch Zugabe von Verbindungen der allgemeinen Formeln I - IV zum Monomerengemisch in die Olefinpolymerisate eingebaut.

$$R_1C(COOR_2)=C(COOR_3)R_4 \qquad (I)$$

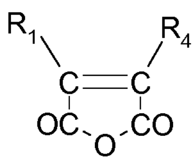

(II)

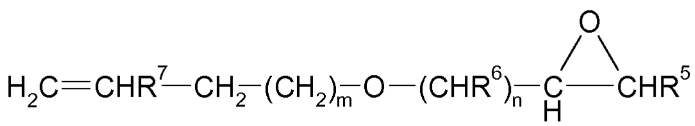

(III)

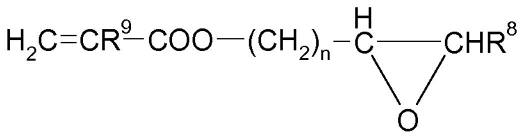

(IV),

wobei die Reste $R^1$ - $R^9$ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für $R^1$ - $R^7$ ist Wasserstoff, für m der Wert 0 oder 1 und für n der Wert 1. Die entsprechenden Verbindungen sind Maleinsäure, Fumarsäure, Maleinsäureanhydrid, bzw. Alkenylglycidylether oder Vinylglycidylether.

Bevorzugte Verbindungen der Formeln I, II, III und IV sind Maleinsäure und Maleinsäureanhydrid als Komponente $B_3$) und Epoxygruppen-enthaltende Ester der Acrylsäure und/oder Methacrylsäure, wobei Glycidylacrylat und Glycidylmethacrylat (als Komponente $B_3$) besonders bevorzugt werden.

Besonders bevorzugt sind Olefinpolymerisate I aus

| | |
|---|---|
| 50 bis 89,8 | Gew.-% Ethylen, vorzugsweise 55 bis 85,7, |
| 10 bis 50 | Gew.-% 1-Buten, vorzugsweise 14 bis 44, |
| 0,2 bis 2 | Gew.-% Acrylsäure oder Maleinsäure oder Maleinsäureanhydrid, bevorzugt von 0,3 bis 1 Gew.-%, |

oder

| | |
|---|---|
| 40 bis 69,9 | Gew.-% Ethylen, vorzugsweise 50 bis 64,9, |

(fortgesetzt)

| | |
|---|---|
| 30 bis 60 | Gew.-% 1-Octen, vorzugsweise 35 bis 49, |
| 0,05 bis 2 | Gew.-% Acrylsäure oder Maleinsäure oder Maleinsäureanhydrid, bevorzugt von 0,1 bis 1 Gew.-%. |

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190°C und 2,16 kg Belastung).

Das Molekulargewicht dieser Ethylen-$\alpha$-Olefin-Copolymere liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

In einer besonderen Ausführungsform werden mittels sog. single site catalysts hergestellte Ethylen-$\alpha$-Olefin-Copolymere eingesetzt. Weitere Einzelheiten können der US 5,272,236 entnommen werden. In diesem Fall weisen die Ethylen-$\alpha$-Olefin-Copolymere eine für Polyolefine enge Molekulargewichtsverteilung kleiner 4, vorzugsweise kleiner 3,5 auf.

Bevorzugt eingesetzte Handelsprodukte B sind Exxelor® VA 1801 oder 1803, Kraton® G 1901 FX oder Fusabond® N NM493 D der Firmen Exxon, Kraton und DuPont sowie Tafmer®MH 7010 der Firma Mitsui.

Selbstverständlich können auch Mischungen der vorstehend aufgeführten Kautschuktypen eingesetzt werden.

Insbesondere bevorzugt sind Copolymerisate II aufgebaut aus

$B_1$) 50 bis 98, insbesondere 55 bis 95 Gew.-% Ethylen

$B_5$) 0,1 bis 40, insbesondere 0,3 bis 20 Gew.-% Glycidylacrylat und/oder Glycidylmethacrylat, (Meth)acrylsäure und/oder Maleinsäureanhydrid, und

$B_4$) 1 bis 45, insbesondere 5 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i-bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. Blackley in der Monographie "Emulsion Polymerization" beschrieben wird. Die verwendbaren Emulgatoren und Katalysatoren sind an sich bekannt.

Insbesondere bevorzugt sind Copolymerisate II, welche keine Einheiten $B_5$) enthalten, wobei jedoch die Säurekomponente $B_4$) mit Zn neutralisiert wurde. Hierbei sind Ethylen-(Meth)acrylsäure-Copolymere bevorzugt, welche bis zu 72 % mit Zink neutralisiert wurden (im Handel als Surlyn® 9520 der Firma DuPont erhältlich).

Als Komponente C) enthalten die erfindungsgemäßen Formmassen 0,1 bis 10, vorzugsweise 0,25 bis 5 und insbesondere 0,5 bis 3 Gew.-% eines Copolymerisates aus:

$C_1$) 50 bis 95, vorzugsweise 60 bis 85 Gew.-% Styrol oder substituierten Styrolen der allgemeinen Formel I oder deren Mischungen

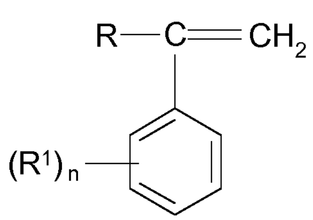

I

worin R einen Alkylrest mit 1 bis 8 C-Atomen oder ein Wasserstoffatom und $R^1$ einen Alkylrest mit 1 bis 8 C-Atomen darstellen und n den Wert 0, 1, 2 oder 3 hat und

$C_2$) 5 bis 50, vorzugsweise 15 bis 40 Gew.-% von einem oder mehreren Dicarbonsäureanhydriden abgeleitete Struktureinheiten.

Bevorzugte Reste R sind Methyl, Ethyl oder Wasserstoff.
Bevorzugte Reste $R^1$ sind Methyl, Ethyl.

Bevorzugte Komponenten $C_1$) sind Styrol oder $\alpha$-Methylstyrol oder deren Mischungen.

Als Komponente $C_2$) kommen alle dem Fachmann bekannten und im Stand der Technik beschriebenen Dicarbonsäureanhydride in Betracht; bevorzugt werden Maleinsäureanhydrid, Methylmaleinsäureanhydrid, Itaconsäureanhydrid oder deren Mischungen eingesetzt; besonders bevorzugt wird Maleinsäureanhydrid eingesetzt.

Bevorzugt wird als Komponente C) ein Copolymerisat aus Styrol ($C_1$) und Maleinsäureanhydrid ($C_2$) eingesetzt.

Bevorzugt sind Copolymerisate C) mit einem Verhältnis der Einheiten $C_1 : C_2$ von 1 : 1 bis 8 : 1, bevorzugt von 2 : 1 bis 5 : 1.

Üblicherweise sind derartige Copolymerisate durch radikalische Polymerisation erhältlich.

Mögliche Lösungsmittel sind z.B. N,N-Dimethylformamid (DMF) bei 60°C mit 2,2'-Azobisisobutyronitril als Initiator (vgl. Baruah S.D., Laskar N.C. Styrene-maleic anhydride copolymers: Synthesis characterization, and thermal properties. J. Appl. Polymer Science 60 (1996), 649-656) oder auch Toluol (z.B. Vora R.A. et al., Synthesis and characterization of styrene-maleic anhydride copolymers, J. Polym. Mater. 12 (1995), 111-120).

Geeignet sind kommerzielle, hochmolekulare Copolymere C) mit Molmassen ($M_w$) zwischen ca. 65000 und 180000 g/mol und Maleinsäureanhydrid-Gehalten von 15 bis 28 % (Fa. Polyscope). Bevorzugt sind Copolymere C) mit Molkulargewichten ($M_w$) von 5000 bis 25000, vorzugsweise 8000 bis 15000 g/mol. Derartige Produkte sind unter der Marke SMA® im Handel von der Firma Cray Valley oder Joncryl® ADR 3229 der BASF SE erhältlich.

Als Komponente D) enthalten die erfindungsgemäßen Formmassen 0,001 bis 20, vorzugsweise 0,05 bis 10 und insbesondere 0,1 bis 5 Gew.-% Eisenpulver, bevorzugt mit einer Teilchengröße (auch als Partikelgröße bezeichnet) von maximal 10 $\mu$m ($d_{50}$-Wert). Bevorzugte Fe-Pulver sind durch thermische Zersetzung von Eisenpentacarbonyl erhältlich.

Eisen kommt in mehreren allotropen Modifikationen vor:

1. $\alpha$-Fe (Ferrit) bildet raumzentrierte Würfelgitter, ist magnetisierbar, löst wenig Kohlenstoff, kommt in reinem Eisen bis 928°C vor. Bei 770°C (Curie-Temperatur) verliert es seine ferromagnetischen Eigenschaften und wird paramagnetisch; Eisen im Temperaturbereich von 770 bis 928°C wird auch als $\beta$-Fe bezeichnet. Bei gewöhnlicher Temperatur und einem Druck von mindestens 13000 MPa geht $\alpha$-Fe in sog. $\varepsilon$-Fe unter einer Vol.-Verminderung von ca. 0,20 $cm^3$/mol über, wobei sich die Dichte von 7,85 auf 9,1 (bei 20000 MPa) erhöht.
2. $\gamma$-Fe (Austenit) bildet flächenzentrierte Würfelgitter, ist unmagnetisch, löst viel Kohlenstoff und ist nur im Temperaturbereich von 928 bis 1398°C zu beobachten.
3. $\delta$-Fe, raumzentriert, existiert zwischen 1398°C und dem Schmelzpunkt 1539°C.

Metallisches Eisen ist allgemein silberweiß, mit einer Dichte 7,874 $g/cm^3$ (Schwermetall), Schmelzpunkt 1539°C, Siedepunkt 2880°C; spezifische Wärme (zwischen 18 und 100°C) etwa 0,5 $g^{-1}$ $K^{-1}$, Zugfestigkeit 220 bis 280 $N/mm^2$. Die Werte gelten für das chemisch reine Eisen. Großtechnisch wird Eisen durch Verhüttung von Eisenerzen, Eisenschlacken, Kiesabbränden, Gichtstaub und durch Umschmelzen von Schrott und Legierung hergestellt.

Das erfindungsgemäße Eisenpulver wird bevorzugt durch thermische Zersetzung von Eisenpentacarbonyl hergestellt, vorzugsweise bei Temperaturen von 150°C bis 350°C. Die hierbei erhältlichen Partikel (Teilchen) haben eine vorzugsweise sphärische Form, d.h. kugelförmig oder nahezu kugelförmige Form (auch als sphärolitisch bezeichnet).

Bevorzugtes Eisenpulver weist eine Teilchengrößenverteilung (Partikelgrößenverteilung) wie nachstehend beschrieben auf, wobei die Teilchengrößenverteilung mittels Laserbeugung in einer hoch verdünnten wässrigen Suspension (z.B. mit Beckmann LS13320 Gerät) bestimmt wird. Optional kann die nachfolgend beschriebene Teilchengröße (und Verteilung) durch Mahlen oder/und Sieben eingestellt werden.

Hierbei bedeutet $d_{xx}$ = XX% des Gesamtvolumens der Partikel ist kleiner als der Wert.

$d_{50}$-Werte: max. 10 $\mu$m, vorzugsweise 1,6 bis 8, insbesondere 2,9 bis 7,5 $\mu$m, ganz besonders 3,4 bis 5,2 $\mu$m

$d_{10}$-Werte: vorzugsweise 1 bis 5 $\mu$m, insbesondere 1 bis 3 und ganz besonders 1,4 bis 2,7 $\mu$m

$d_{90}$-Werte: vorzugsweise 3 bis 35 $\mu$m, insbesondere 3 bis 12 und ganz besonders 6,4 bis 9,2 $\mu$m.

Bevorzugt weist die Komponente D) einen Eisengehalt von 97 bis 99,8 g/100 g, vorzugsweise von 97,5 bis 99,6 g/100 g auf. Der Gehalt an weiteren Metallen beträgt vorzugsweise unter 1000 ppm, insbesondere unter 100 ppm und ganz besonders unter 10 ppm.

Der Fe-Gehalt wird üblicherweise durch Infrarotspektroskopie bestimmt.
Der C-Gehalt beträgt vorzugsweise 0,01 bis 1,2, vorzugsweise 0,05 bis 1,1 g/100 g und insbesondere 0,4 bis 1,1 g/100g. Dieser C-Gehalt entspricht bei den bevorzugten Eisenpulvern solchen, die im Anschluss an die thermische Zersetzung nicht mit Wasserstoff reduziert werden. Der C-Gehalt wird üblicherweise durch Verbrennen der Probenmenge im Sauerstoffstrom und anschließender IR Detektion des entstandenen $CO_2$-Gases (mittels Leco CS230 oder CS-mat 6250 der Firma Juwe) in Anlehnung an ASTM E1019 bestimmt.

Der Stickstoffgehalt beträgt vorzugsweise max. 1,5 g/100 g, bevorzugt von 0,01 bis 1,2 g/100g. Der Sauerstoffgehalt beträgt vorzugsweise max. 1,3 g/100g, bevorzugt 0,3 bis 0,65 g/100g. Die Bestimmungen von N und O erfolgt durch Erhitzen der Probe im Graphitofen auf ca. 2100°C. Der hierbei in der Probe erhaltene Sauerstoff wird zu CO umgesetzt und über einen IR-Detektor gemessen. Der unter den Reaktionsbedingungen freigesetzte N aus den N-haltigen Verbindungen wird mit dem Trägergas ausgetragen und mittels WLD (Thermal Conductivity Detector/TC) detektiert und erfasst (beide Methoden in Anlehnung an ASTM E1019).

Die Klopfdichte (tap density) beträgt vorzugsweise 2,5 bis 5 g/$cm^3$, insbesondere 2,7 bis 4,4 g/$cm^3$. Darunter wird im Allgemeinen die Dichte verstanden, wenn das Pulver in den Container z.B. gefüllt und geschüttelt wird, um eine Kompaktierung zu erzielen.
Weiterhin bevorzugte Eisenpulver können mit Eisenphosphat, Eisenphosphit oder $SiO_2$ oberflächlich beschichtet sein.

Die BET-Oberfläche gemäß DIN ISO 9277 beträgt vorzugsweise von 0,1 bis 10 $m^2$/g, insbesondere 0,1 bis 5 $m^2$/g, bevorzugt 0,2 bis 1 $m^2$/g und insbesondere 0,4 bis 1 $m^2$/g.

Um eine besonders gute Verteilung der Eisenpartikel zu erzielen, kann man einen Batch mit einem Polymeren einsetzen. Polymere wie Polyolefine, Polyester oder Polyamide sind hierfür geeignet, wobei vorzugsweise das Batchpolymer gleich der Komponente A) ist. Der Masseanteil des Eisens im Polymeren beträgt in der Regel 15 bis 80, vorzugsweise 20 bis 40 Masse-%.

Als Komponente E) enthalten die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-Halogenids, insbesondere in Mischung mit einem Alkalihalogenid, vorzugsweise KJ, insbesondere im Verhältnis 1 : 4.

Als Salze des einwertigen Kupfers kommen vorzugsweise Kupfer(I)-Acetat, Kupfer(I)-Chlorid, - Bromid und -Jodid in Frage. Diese sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder-bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Konzentrate sind insbesondere solche mit PA6 und/oder PA66.

Als Komponente F) enthalten die erfindungsgemäßen Formmassen von 100 ppm bis 5 Gew.-%, vorzugsweise von 500 ppm bis 1 Gew.-% und insbesondere von 0,01 bis 0,3 Gew.-% einer phosphorhaltigen anorganischen Säure oder deren Salze oder deren Esterderivate oder deren Mischungen.

Bevorzugte Säuren sind die Sauerstoffsäuren des Phosphors wie hypophosphorige Säure (Phosphinsäure), phosphorige Säure, Phosphorsäure oder deren Mischungen.

Als Metallkationen für derartige Salze sind Übergangsmetallkationen oder Alkali- oder Erdalkalimetallkationen geeignet, wobei Calcium, Barium, Magnesium, Natrium, Kalium, Mangan, Aluminium oder deren Mischungen besonders bevorzugt sind.

Besonders bevorzugte Salze sind Na-hypophosphit, Mangan (II)-hypophosphit $Mn(H_2PO_2)_2$, Aluminium-hypophosphit oder deren Mischungen.

Geeignete bevorzugte Esterderivate (Phosphonate oder deren Salze) der Sauerstoffsäuren des Phosphors sind solche, welche gleiche oder verschiedene Alkylreste mit 1 bis 4 C-Atomen, Arylreste mit 6 bis 14 C-Atomen als Substituenten tragen.

Bevorzugte Verbindungen sind beispielsweise das Ca-Salz eines Phosphonates (erhältlich als Irgamol® 195 der BASF SE) oder der Diethylester eines Phosphonates (erhältlich als Irgamol® 295 der BASF SE).

Die thermoplastischen Formmassen können als Komponente G) erfindungsgemäß 0 bis 2 Gew.-% mindestens eines Polyethylenimin-Homopolymerisats oder-Copolymerisates enthalten. Bevorzugt beträgt der Anteil von G) 0,01 bis 2 Gew.-% und insbesondere 0,1 bis 1 und ganz besonders bevorzugt 0,1 bis 0,5 Gew.-% bezogen auf A) bis H), wobei verzweigte Polyethylenimine bevorzugt sind.

Unter Polyethyleniminen im Sinne der vorliegenden Erfindung sollen sowohl Homo- als auch Copolymerisate verstanden werden, welche beispielsweise nach den Verfahren in Ullmann Electronic Release unter dem Stichwort "Aziridine" oder gemäß WO-A 94/12560 erhältlich sind.

Die Homopolymerisate sind im Allgemeinen durch Polymerisation von Ethylenimin (Aziridin) in wäßriger oder organischer Lösung in Gegenwart von säureabspaltenden Verbindungen, Säuren oder Lewis-Säuren erhältlich. Derartige Homopolymerisate sind verzweigte Polymere, die in der Regel primäre, sekundäre und tertiäre Aminogruppen im Verhältnis von ca. 30 % zu 40 % zu 30 % enthalten. Die Verteilung der Aminogruppen kann im allgemeinen mittels $^{13}C$-

NMR Spektroskopie bestimmt werden. Diese beträgt vorzugsweise1/0,7-1,4/0,3-1,1 bis 1/0,8-1,3/0,5-0,9.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 C-Atomen im Alkylenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentetramin, Dihexamethylentriamin, Aminopropylethylendiamin und Bisaminopropylethylendiamin.

Polyethylenimine weisen üblicherweise ein mittleres Molekulargewicht (Gewichtsmittel) von 100 bis 3.000.000, vorzugsweise von 500 bis 2.000.000 auf (bestimmt mittels Lichtstreuung). Das bevorzugte $M_w$ beträgt von 700 bis 1.500.000, insbesondere von 1.000 bis 500.000.

Darüber hinaus eignen sich vernetzte Polyethylenimine, die durch Reaktion von Polyethyleniminen mit bi- oder polyfunktionellen Vernetzern erhältlich sind, welche als funktionelle Gruppe mindestens eine Halogenhydrin-, Glycidyl-, Aziridin-, Isocyanateinheit oder ein Halogenatom aufweisen. Als Beispiele seinen Epichlorhydrin oder Bischlor-hydrinether von Polyalkylenglykolen mit 2 bis 100 Ethylenoxid- und/oder Propylen-oxid-Einheiten sowie die in der DE-A 19 93 17 20 und US 4 144 123 aufgeführten Verbindungen genannt. Verfahren zur Herstellung von vernetzten Polyethyleniminen sind u.a. aus den o.g. Schriften sowie EP-A 895 521 und EP-A 25 515 bekannt.

Weiterhin sind gepfropfte Polyethylenimine geeignet, wobei als Pfropfmittel sämtliche Verbindungen eingesetzt werden können, die mit den Amino- bzw. Iminogruppen der Polyethylenimine reagieren können. Geeignete Pfropfmittel und Verfahren zur Herstellung von gepfropften Polyethyleniminen sind beispielsweise der EP-A 675 914 zu entnehmen.

Ebenso geeignete Polyethylenimine im Sinne der Erfindung sind amidierte Polymerisate, die üblicherweise durch Umsetzung von Polyethyleniminen mit Carbonsäuren, deren Ester oder Anhydride, Carbonsäureamide oder Carbonsäurehalogenide erhältlich sind. Je nach Anteil der amidierten Stickstoffatome in der Polyethyleniminkette können die amidierten Polymerisate nachträglich mit den genannten Vernetzern vernetzt werden. Vorzugsweise werden hierbei bis zu 30 % der Aminofunktionen amidiert, damit für eine anschließende Vernetzungsreaktion noch genügend primäre und/oder sekundäre Stickstoffatome zur Verfügung stehen.

Außerdem eignen sich alkoxylierte Polyethylenimine, die beispielsweise durch Umsetzung von Polyethylenimin mit Ethylenoxid und/oder Propylenoxid erhältlich sind. Auch derartige alkoxylierte Polymerisate sind anschließend vernetzbar.

Als weitere geeignete erfindungsgemäße Polyethylenimine seien hydroxylgruppenhaltige Polyethylenimine und amphotere Polyethylenimine (Einbau von anionischen Gruppen) genannt sowie lipophile Polyethylenimine, die in der Regel durch Einbau langkettiger Kohlenwasserstoffreste in die Polymerkette erhalten werden. Verfahren zur Herstellung derartiger Polyethylenimine sind dem Fachmann bekannt, so dass sich weitere Einzelheiten hierzu erübrigen.

Als Komponente H) können die erfindungsgemäßen Formmassen bis zu 60, vorzugsweise bis zu 50 Gew.-% weiterer Zusatzstoffe enthalten.

Als faser- oder teilchenförmige Füllstoffe H) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 5 bis 40, vorzugsweise 10 bis 40 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

$$(X-(CH_2)_n)_k-Si-(O-C_mH_{2m+1})_{4-k}$$

in der die Substituenten folgende Bedeutung haben:

X $NH_2$-, 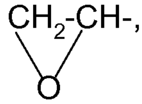, HO-,

| | |
|---|---|
| n | eine ganze Zahl von 2 bis 10, bevorzugt 3 bis 4 |
| m | eine ganze Zahl von 1 bis 5, bevorzugt 1 bis 2 |
| k | eine ganze Zahl von 1 bis 3, bevorzugt 1 |

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf H)) zur Oberflächenbeschichtung eingesetzt.
Geeignet sind auch Langglasfasern als Komponente H) welche als Roving eingesetzt werden können. Die erfindungsgemäß als Roving eingesetzten Glasfasern weisen einen Durchmesser von 6 bis 20 µm, bevorzugt von 10 bis 18 µm auf, wobei der Querschnitt der Glasfasern rund, oval oder eckig ist. Insbesondere werden erfindungsgemäß E-Glasfasern verwendet. Es können aber auch alle anderen Glasfasersorten, wie z.B. A-, C-, D-, M-, S-, R-Glasfasern oder beliebige Mischungen davon oder Mischungen mit E-Glasfasern eingesetzt werden.
Bevorzugt beträgt das L/D (Länge/Durchmesser)-Verhältnis 100 bis 4000, insbesondere 350 bis 2000 und ganz besonders 350 bis 700.

Geeignet sind auch nadelförmige mineralische Füllstoffe.
Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente H) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester oder Amide von Fettsäuren mit 10 bis 44 C-Atomen, vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.
Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Penta-erythrittetrastearat.

Es können auch Mischungen verschiedener Ester oder Amide oder Ester mit Amiden in Kombination eingesetzt werden, wobei das Mischungsverhältnis beliebig ist.

Als sterisch gehinderte Phenole H) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel

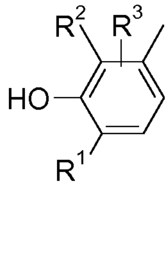

in Betracht, in der bedeuten:

$R^1$ und $R^2$ eine Alkylgruppe, eine substituierte Alkylgruppe oder eine substituierte Triazolgruppe, wobei die Reste $R^1$ und $R^2$ gleich oder verschieden sein können und $R^3$ eine Alkylgruppe, eine substituierte Alkylgruppe, eine Alkoxygruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel

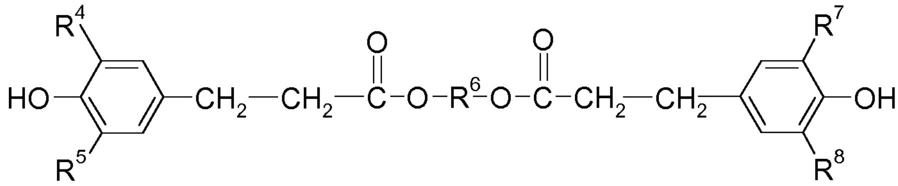

wobei $R^4$, $R^5$, $R^7$ und $R^8$ unabhängig voneinander $C_1$-$C_8$-Alkylgruppen darstellen, die ihrerseits substituiert sein können (mindestens eine davon ist eine sterisch anspruchsvolle Gruppe) und $R^6$ einen zweiwertigen aliphatischen Rest mit 1 bis 10 C-Atomen bedeutet, der in der Hauptkette auch C-O-Bindungen aufweisen kann.

Bevorzugte Verbindungen, die diesen Formeln entsprechen, sind

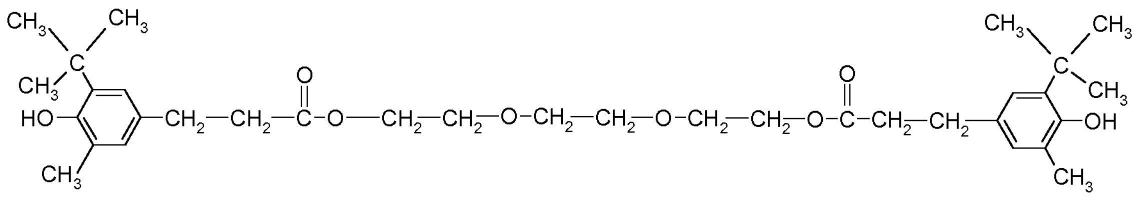

(Irganox® 245 der Firma BASF SE)

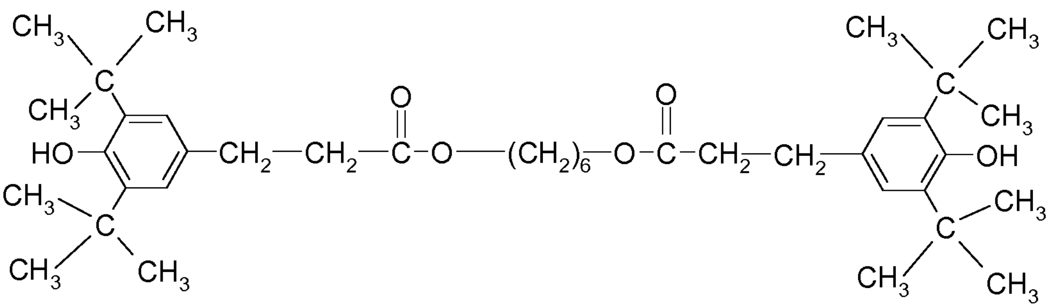

(Irganox® 259 der Firma BASF SE)

Beispielhaft genannt seien insgesamt als sterisch gehinderte Phenole:

2,2'-Methylen-bis-(4-methyl-6-tert.-butylphenol), 1,6-Hexandiol-bis[3-(3,5-di-tert.-butyl-4-hydroxyphenyl)-propionat), Pentaerythrityl-tetrakis-[3-(3,5-di-tert.-butyl-4-hydroxy-phenol)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma Ciba Geigy, das besonders gut geeignet ist.

Die Antioxidantien H), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis G) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Bevorzugte Komponenten H) weisen sowohl einen P-haltigen Substituenten als auch eine sterisch gehinderte Phenolgruppierung auf und sind z.B. als Irgafos®168, Irgafos® TPP, Irgafos® TNPP, Irgafos® P-EPQ (Phosphonit) der BASF SE im Handel erhältlich.

Als Komponente H) können die erfindungsgemäßen Formmassen 0,05 bis 5, vorzugsweise 0,1 bis 2 und insbesondere 0,25 bis 1,5 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit metall. Eisen und $FeCl_3$ (Name von lateinischem niger = schwarz).

Die Komponente H) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Als Komponente H) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Flammschutzmittel seien Phosphor, P- und N-haltige Verbindungen genannt.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) bis G) sowie gegebenenfalls H) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen langglasfaserverstärkten Polyamidformmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 3 bis 25 mm, insbesondere von 5 bis 14 mm aufweist, kann mit den üblichen Verarbeitungsverfahren (wie z. B. Spritzgießen, Pressen) zu Formteilen weiterverarbeitet werden.

Das bevorzugte L/D-Verhältnis des Granulates beträgt nach Pultrusion 2 bis 8, insbesondere 3 bis 4,5.

Besonders gute Eigenschaften können beim Formteil mit schonenden Verarbeitungsverfahren erreicht werden. In diesem Zusammenhang bedeutet schonend vor allem, dass ein übermäßiger Faserbruch und die damit einhergehende starke Reduktion der Faserlänge weitgehend vermieden wird. Beim Spritzguss bedeutet dies, dass Schnecken mit

großem Durchmesser und tiefem Kompressionsverhältnis, insbesondere kleiner 2, und großzügig dimensionierte Düsen- und Angusskanäle bevorzugt zum Einsatz kommen. Ergänzend muss dafür gesorgt werden, dass die Stäbchengranulate mit Hilfe von hohen Zylindertemperaturen rasch aufschmelzen (Kontakterwärmung) und die Fasern nicht durch übermäßige Scherbeanspruchung zu stark zerkleinert werden. Unter Berücksichtigung dieser Maßnahmen werden erfindungsgemäß Formteile erhalten, die im Mittel eine höhere Faserlänge aufweisen als vergleichbare Formteile hergestellt aus kurzfaserverstärkten Formmassen. Hierdurch wird eine zusätzliche Verbesserung der Eigenschaften, insbesondere beim Zug- und E-Modul, der Reißfestigkeit und der Kerbschlagzähigkeit erreicht.

Nach der Formteilverarbeitung z.B. durch Spritzguss beträgt die Faserlänge üblicherweise 0,5 bis 10 mm, insbesondere 1 bis 3 mm.

Die erfindungsgemäßen thermoplastischen Formmassen zeichnen sich durch eine gute Schmelzefestigkeit und Verarbeitbarkeit , insbesondere beim Extrusionsblasformen (3-D-Saugblasverfahren, 3-D-Ablegeverfahren) oder Spritz-Streckblasformen, bei gleichzeitig guter Mechanik, sowie eine deutlich verbesserte Bindenahtfestigkeit und Oberfläche sowie thermische Stabilität (insbesondere WAB) aus.

Diese eignen sich zur Herstellung von Formkörpern jeglicher Art.

Nachfolgend sind einige Beispiele genannt:

- Rohre
- Reservoir/Tanks
- Turboladerohre (kalte und heiße Seite), (Ladeluftrohre)
- Luftkanäle
- Entlüftungsschläuche/Rohre (z.B. für Kurbelgehäuse)
- Solarthermie/Wärmetauscher
- Klimatechnik
- Kompressoren/Verdichtung/Pumpen
- Öfen
- Heißdampf
- Rohre und Schläuche für Öllüftung oder Kühlwasser
- Rohre und Schläuche für Klimatisierung
- Faltenbälge
- Resonatorgehäuse
- Hülsen, Manschetten, z.B. für Stoßdämpfer
- Gehäuse
- Druckspeicher

Beispiele

Es wurden folgende Komponenten eingesetzt:

Komponente A/1

Polyamid 66 mit einer Viskositätszahl VZ von 205 ml/g, gemessen als 0,5 gew.-%ige Lösung in 96 gew.-%iger Schwefelsäure bei 25°C nach ISO 307. (Es wurde Ultramid® A34 der BASF SE verwendet).

Komponente A/2

PA 6 mit einer VZ von 250 ml/g (Ultramid® B40 der BASF SE).

Komponente B)

Ethylen-Methacrylsäurecopolymer (90/10), neutralisiert zu ca. 70 % mit Zink (Surlyn® 9520 der Firma DuPont)

Komponente C)

Styrol-Maleinsäureanhydridcopolymer (3 : 1) (SMA® 3000P von Cray Valley)

$M_w$ = 9500 g/mol

$M_n$ = 3800 g/mol

Komponente D)

Eisenpulver CAS-Nr. 7439-89-6. Bestimmung des Fe, C, N und O-Gehaltes siehe Beschreibung Seite 10 und 11, eingesetzt als 25 %iger Batch in PA 66.

| | | | |
|---|---|---|---|
| Fe | g/100 g | min. 97.7 | IR Detektion |
| C | g/100 g | max.1.0 | IRS |
| N | g/100 g | max. 1.0 | TCD |
| O | g/100 g | max. 0.6 | IRS |

Teilchengrößenverteilung: (Laserbeugung mit Beckmann LS13320)

| | |
|---|---|
| $d_{10}$ | 1,4 bis 2,7 µm |
| $d_{50}$ | 2,9 bis 4,2 µm |
| $d_{90}$ | 6,4 bis 9,2 µm |

BET-Oberfläche 0,44 $m^2/g$ (DIN ISO 9277)
Komponente E)
CuJ/KJ im Verhältnis 1 : 4 (20 %-iger Batch in PA 6)
Komponente F)
$NaH_2PO_2$ x 1 $H_2O$
Komponente G)

| Lupasol® | WF |
|---|---|
| $M_w$ | 25000 |
| Prim/sek./tert. Amine | 1/1,2/0,76 |

Lupasol® = eingetragene Marke der BASF SE
Das Verhältnis primär/sekundär/tertiäre Amine wurde mittels $^{13}C$-NMR-Spektroskopie bestimmt.
Komponente H/1
Glasfasern (Schnittglasfaser mit Dicke von ca. 10 µm).
Komponente H/2
Nigrosin (40 %ig in PA 6)

Die Formmassen (Vortrocknung auf <0,05 %) wurden auf einer (ZSK) MC26 bei einem Durchsatz von 10 kg/h und ca. 280 °C flachem Temperaturprofil hergestellt.

- Drehzahl 300 U/min
- Düse 4 mm Durchmesser

Es wurden folgende Messungen durchgeführt:

Rauheitsmessung Rz
Rz ist sogenannte maximale Rauheitsprofilhöhe nach DIN EN ISO 4287
Rz wird als arithmetisches Mittel aus den maximalen Profilhöhen von 5 Einzelmessungen ermittelt.

Die Messstrecken der Einzelmessungen Ir betragen 2.5 mm, die Grenzwellenlänge $\lambda c$ = 2.5 mm, die Taststrecke It beträgt 15 mm, die Messstrecke In = 12.5 mm. Abtastgeschwindigkeit ist vt = 0.5 mm/s. Als Taster wird TK300 (Fa. Hommelwerke) verwendet, der Tastspitzenradius $r_{SP\ max}$ ist 5 µm und der Digitalisierungsabstand $\Delta x_{max}$ ist 1.5 µm.

| | |
|---|---|
| Klasse 4: | < 30 µm |
| Klasse 3: | 30 - 50 µm |
| Klasse 2: | 50 - 70 µm |
| Klasse 1: | > 70 µm |

Sagging test - Stabilität des Vorformlings.

Senkrechte Extrusion eines Rohres mittels eines Kapillarrheometers und Verfolgung der Längenveränderung und des Durchmessers des Rohres unter seinem Eigengewicht nach Stop der Extrusion
Hierzu wurde eine Ringschlitzdüse (Dimension: •Länge L im zylindrischen Spalt 10 mm •Innendurchmesser 8 mm •Außendurchmesser 9 mm) in Verbindung mit einem Kapillarrheometer der Firma Göttfert verwendet.

Versuchsparameter:

Kapillarrheometer Rheograph 2003, Fa. Göttfert

| | |
|---|---|
| Temperatur: | 275 °C |
| Aufschmelzzeit im Rheometer: | 5 min |
| Durchmesser des Reservoirs: | 12 mm |
| Stempelvorschubgeschwindigkeit: | 20 mm/s |
| Extrusionszeit: | 5 s |

Vorgehensweise:

Es wurden 30g Polymer bei 275°C in den Rheograph 2003 von Göttfert eingefüllt.
Mit Hilfe des Stempels wurde die Probe nach dem Aufschmelzen komprimiert.
Der Stempel wurde nach unten gefahren bis der Zeiger an der Skala auf 17,2 cm steht. Anschließend wurde der Düsenaustritt gereinigt und der Stempel auf 17 cm nach unten gefahren.
Unter der Düse bildete sich dabei ein Extrudatstrang von etwa 1 cm Länge, der nicht entfernt wurde.
Nach der Aufschmelzzeit von 5 Minuten startete die Maschine den Stempelvorschub von 20mm/s für 5 Sekunden. Der aus der Düse austretende Strang wurde mit einer Videokamera gefilmt.
Um das Stoppen des Stempels im Film zu sehen, wurde ein Laserpointer für die Dauer der Extrusion in den Film projiziert (manuell). Eine Skala mit Probenbezeichnung hinter dem Strang ermöglichte es, später durch Begutachten des Films die Stranglänge in dem Moment auszuwerten, in dem der Stempel stoppte.
Sobald sich der Strang nicht mehr auslängt, wurde der Film gestoppt und die Messung beendet. Das so entstandene Rohr wurde nach dem Abkühlen entfernt.
Am Probenstrang wurden das Gewicht, die Länge und der Durchmesser bestimmt.
Beim Durchmesser wird der maximale Durchmesser ca. 2cm unterhalb des Probenwulstes mit einem Messschieber gemessen.

Auswertung:

Eine Quantifizierung der Verformungsstabilität des Vorformlings erfolgte durch Berechnung des Sagging Ratio SR. SR setzt die Längen des extrudierten Rohres nach Beendigung des Stempelvorschubs nach 5 s Extrusionszeit (L1) und die Länge des Rohres nach vollständiger Abkühlung (L2) ins Verhältnis:

$$SR = \left( \frac{L2}{L1} - 1 \right) \bullet 100\ \%$$

Visuelle Beurteilung des Blasformverhaltens

Kriterien:

1. Auslängen (sagging) des Vorformlings (axiale Unterschiede in der Wanddicke über gesamte Bauteillänge).

2. Schwellverhalten bei Düsenaustritt (Schwellen bestimmt die mittlere Wanddicke -bei gegebenem Düsenspalt- im Bauteil).

3. Oberflächenqualität innen und außen.

4. Verschweißen der Bindenähte nach Stegdornhalter

Klasseneinteilung: 1 (mangelhaft) bis 5 (sehr gut)

Mechanik:

Der Zugversuch erfolgte gemäß ISO 527-2 vor und nach Wärmelagerung bei 200°C für 500, 1000 Std., sowie bei 220°C für 500 bzw. 1000 Stunden.

Die Zusammensetzungen der Formmassen und die Ergebnisse der Messungen sind den Tabellen zu entnehmen.

Tabelle 1

| | Komponenten [Gew.-%] | | | | | | | | | |
|---|---|---|---|---|---|---|---|---|---|---|
| Beispiele | A/1 | B | C | D | E | G | H/1 | F | A/2 | H/2 |
| Vergleichsbeispiel 1 | 64 | 20 | 1 | | | | 15 | | | |
| Vergleichsbeispiel 2 | 69,25 | | | 4 | 1,5 | 0,25 | 15 | | 10 | |
| Vergleichsbeispiel 3 | 48,25 | 20 | 1 | 4 | 1,5 | 0,25 | 15 | | 10 | |
| Beispiel 1 | 48,4 | 20 | 1 | 4 | 1,5 | | 15 | 0,1 | 10 | |
| Beispiel 2 | 46,5 | 20 | 1 | 4 | 1,5 | | 15 | 0,1 | 10 | 1,9 |
| Beispiel 3 | 48,15 | 20 | 1 | 4 | 1,5 | 0,25 | 15 | 0,1 | 10 | |
| Beispiel 4 | 46,25 | 20 | 1 | 4 | 1,5 | 0,25 | 15 | 0,1 | 10 | 1,9 |

Tabelle 2

| | | | | Zugversuch vor Wärmealterung | | | Zugversuch nach Wärmealterung bei 200°C für 500 h | | |
|---|---|---|---|---|---|---|---|---|---|
| | Sagging Ratio SR [%] | Oberflächenrauhigkeit RZ [Klasse] | Blasformbarkeit [Klasse] | Streck-Spannung [MPa] | Bruchdehnung [%] | E-Modul [MPa] | Streck-Spannung [MPa] | Bruchdehnung [%] | E-Modul [MPa] |
| Vergleichsbeispiel 1 | 3,6 | 2 | 4 | 193,64 | 6,0 | 4814 | 100,33 | 3,42 | 5180 |
| Vergleichsbeispiel 2 | > 100 | 4 | 1 | 128,17 | 3,01 | 5944 | 98,8 | 1,7 | 6405 |
| VergleichsBeispiel 3 | > 100 | 3 | 1 | 107,79 | 7,5 | 4695 | 107,17 | 8,79 | 4854 |
| Beispiel 1 | 9,3 | 3 | 5 | 99,65 | 9,04 | 4895 | 107,67 | 8,88 | 4994 |
| Beispiel 2 | 10,6 | 3 | 5 | 96,61 | 6,91 | 4870 | 112,95 | 7,2 | 5092 |
| Beispiel 3 | 7,4 | 4 | 4 | 9915 | 9,37 | 4914 | 107,4 | 9,24 | 4953 |
| Beispiel 4 | 16,7 | 4 | 4 | n.d. | n.d. | n.d. | n.d. | n.d. | n.d. |

Tabelle 3

| | Zugversuch nach Wärmealterung bei 200°C für 1000 h | | | Zugversuch nach Wärmealterung bei 220°C für 500 h | | | Zugversuch nach Wärmealterung bei 220°C für 1000 h | | |
|---|---|---|---|---|---|---|---|---|---|
| | Streck-Spannung [MPa] | Bruchdehnung [%] | E-Modul [MPa] | Streck-Spannung [MPa] | Bruchdehnung [%] | E-Modul [MPa] | Streck-Spannung [MPa] | Bruchdehnung [%] | E-Modul [MPa] |
| Vergleichsbeispiel 1 | 67,19 | 1,6 | 5194 | 68,08 | 1,84 | 5036 | 45,37 | 1,33 | 4971 |
| Vergleichsbeispiel 2 | 103,29 | 1,83 | 6362 | 99,66 | 1,68 | 6565 | 95,22 | 1,56 | 6684 |
| VergleichsBeispiel 3 | 103,17 | 7,25 | 4740 | 98,73 | 4,72 | 4889 | 105,59 | 4,42 | 4806 |
| Beispiel 1 | 103,66 | 8,76 | 4858 | 99,85 | 8,7 | 4980 | 92,92 | 8,16 | 4849 |
| Beispiel 2 | 108,2 | 7,04 | 5027 | 102,29 | 7,87 | 5069 | 96,6 | 4,5 | 4992 |
| Beispiel 3 | 104,62 | 8,03 | 4846 | 100,68 | 7,81 | 4957 | 102,09 | 6,57 | 5017 |
| Beispiel 4 | n.d. | n.d. | n.d. | n.d. | n.d. | n.d. | n.d. | n.d. | n.d. |

**Patentansprüche**

**1.** Thermoplastische Formmassen enthaltend

A) 10 bis 94 Gew.-% eines Polyamids,
B) 1 bis 30 Gew.-% eines Schlagzähmodifiers aus einem Copolymerisat I aus

$B_1$) 35 bis 89,9 Gew.-% Ethylen
$B_2$) 10 bis 60 Gew.-% 1-Octen oder 1-Buten oder Propylen oder deren Mischungen und
$B_3$) 0,05 bis 5 Gew.-% funktioneller Monomere, wobei die funktionellen Monomeren ausgewählt sind aus der Gruppe der Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen oder deren Mischungen,

oder aus einem Copolymerisat II aus

$B_1$) 50 bis 98 Gew.-% Ethylen
$B_4$) 2 bis 50 Gew.-% Acrylsäure oder Methacrylsäure oder (Meth)Acrylates mit 1 bis 18 C-Atomen, oder
$B_5$) 0 bis 20 Gew.-% funktioneller Monomerer ausgewählt aus der Gruppe der Carbonsäureanhydrid- oder Epoxidgruppen oder deren Mischungen,

oder deren Mischungen,
C) 0,1 bis 10 Gew.-% eines Copolymerisates aus

$C_1$) 50 bis 95 Gew.-% Styrol oder substituierten Styrolen der allgemeinen Formel I oder deren Mischungen

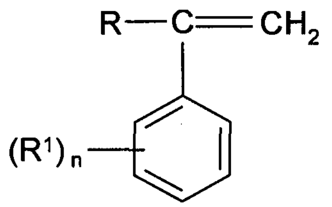

I

worin R einen Alkylrest mit 1 bis 8 C-Atomen oder ein Wasserstoffatom und $R^1$ einen Alkylrest mit 1 bis 8 C-Atomen darstellen und n den Wert 0, 1, 2 oder 3 hat und
$C_2$) 5 bis 50 Gew.-% von einem oder mehreren Dicarbonsäureanhydriden abgeleitete Struktureinheiten,

D) 0,001 bis 20 Gew.-% Eisenpulver,
E) 0,05 bis 3 Gew.-% eines kupferhaltigen Stabilisators,
F) 100 ppm bis 5 Gew.-% Alkalimetallsalze oder Erdalkalimetallsalze von Sauerstoffsäuren des Phosphors oder deren Mischungen,
G) 0 bis 2 Gew.-% eines Polyethylenimin-Homopolymerisates oder -Copolymerisates,
H) 0 bis 60 Gew.-% weiterer Zusatzstoffe,

wobei die Summe der Gewichtsprozente A) bis H) 100 % ergibt.

**2.** Thermoplastische Formmassen nach Anspruch 1, enthaltend

A) 20 bis 94 Gew.-%
B) 1 bis 30 Gew.-%
C) 0,1 bis 10 Gew.-%
D) 0,001 bis 20 Gew.-%
E) 0,05 bis 3 Gew.-%
F) 100 ppm bis 5 Gew.-%
G) 0,01 bis 2 Gew.-%
H) 0 bis 50 Gew.-%

wobei die Summe der Gewichtsprozente A) bis H) 100 % ergibt.

**3.** Thermoplastische Formmassen nach den Ansprüchen 1 oder 2, enthaltend als Komponente C) ein Copolymerisat aus Styrol ($C_1$) und Maleinsäureanhydrid ($C_2$).

**4.** Thermoplastische Formmassen nach den Ansprüchen 1 bis 3, enthaltend als Komponente C) ein Copolymerisat mit einem Verhältnis der Einheiten $C_1 : C_2$ von 1:1 bis 8:1.

**5.** Thermoplastische Formmassen nach den Ansprüchen 1 bis 4, in denen die Komponente D) einen C-Gehalt von 0,01 bis 1,2 g/100 g in Anlehnung an ASTM E 1019 aufweist.

**6.** Thermoplastische Formmassen nach den Ansprüchen 1 bis 5, wobei als Komponente F) aus Na-hypophosphit aufgebaut ist.

**7.** Thermoplastische Formmassen nach den Ansprüchen 1 bis 6, enthaltend ein Copolymerisat I mit $B_3$) 0,05 bis 5 Gew.-% einer ethylenisch ungesättigten Mono- oder Dicarbonsäure oder deren Anhydride.

**8.** Thermoplastische Formmassen nach den Ansprüchen 1 bis 6 enthaltend als Copolymerisat II ein Ethylen-(Meth)acrylsäure Copolymer, welches bis zu 72 % mit Zink neutralisiert ist.

**9.** Verwendung von thermoplastischen Formmassen gemäß den Ansprüchen 1 bis 8 zur Herstellung von Formkörpern jeglicher Art, insbesondere Blasformkörper.

**10.** Formkörper, erhältlich aus den thermoplastische Formmassen gemäß den Ansprüchen 1 bis 8.

## Claims

**1.** A thermoplastic molding composition comprising

A) from 10 to 94% by weight of a polyamide,
B) from 1 to 30% by weight of an impact modifier made of a copolymer I of

$B_1$) from 35 to 89.9% by weight of ethylene
$B_2$) from 10 to 60% by weight of 1-octene or 1-butene or propylene or a mixture of these and
$B_3$) from 0.05 to 5% by weight of functional monomers, where the functional monomers have been selected from the group of the carboxylic acid groups, carboxylic anhydride groups, carboxylic ester groups, carboxamide groups, carboximide groups, amino groups, hydroxy groups, epoxy groups, urethane groups and oxazoline groups and mixtures of these,

or made of a copolymer II of

$B_1$) from 50 to 98% by weight of ethylene
$B_4$) from 2 to 50% by weight of acrylic acid or methacrylic acid or (meth)acrylate having from 1 to 18 carbon atoms, or
$B_5$) from 0 to 20% by weight of functional monomers selected from the group of the carboxylic anhydride groups and epoxy groups and mixtures of these,

or a mixture of these,
C) from 0.1 to 10% by weight of a copolymer of

$C_1$) from 50 to 95% by weight of styrene or substituted styrenes of the general formula I or a mixture of these

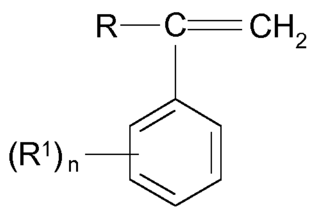

I

in which R is an alkyl radical having from 1 to 8 carbon atoms or a hydrogen atom and $R^1$ is an alkyl radical having from 1 to 8 carbon atoms and n has the value 0, 1, 2, or 3, and
$C_2$) from 5 to 50% by weight of structural units derived from one or more dicarboxylic anhydrides,

D) from 0.001 to 20% by weight of iron powder,
E) from 0.05 to 3% by weight of a copper-containing stabilizer,
F) from 100 ppm to 5% by weight of alkali metal salts or alkaline earth metal salts of oxo acids of phosphorus or a mixture of these,
G) from 0 to 2% by weight of a polyethyleneimine homo- or copolymer,
H) from 0 to 60% by weight of further additives,

where the total of the percentages by weight of A) to H) is 100%.

**2.** The thermoplastic molding composition according to claim 1, comprising

A) from 20 to 94% by weight
B) from 1 to 30% by weight
C) from 0.1 to 10% by weight
D) from 0.001 to 20% by weight
E) from 0.05 to 3% by weight
F) from 100 ppm to 5% by weight
G) from 0.01 to 2% by weight
H) from 0 to 50% by weight

where the total of the percentages by weight of A) to H) is 100%.

**3.** The thermoplastic molding composition according to claim 1 or 2, comprising, as component C), a copolymer of styrene ($C_1$) and maleic anhydride ($C_2$) .

**4.** The thermoplastic molding composition according to claims 1 to 3, comprising, as component C), a copolymer with a ratio of from 1:1 to 8:1 between the units $C_1$:$C_2$.

**5.** The thermoplastic molding composition according to claims 1 to 4, in which the C content of component D) is from 0.01 to 1.2 g/100 g when measured by a method based on ASTM E1019.

**6.** The thermoplastic molding composition according to claims 1 to 5, where as component F) is composed of Na hypophosphite.

**7.** The thermoplastic molding composition according to claims 1 to 6, comprising a copolymer I where $B_3$) is from 0.05 to 5% by weight of an ethylenically unsaturated mono- or dicarboxylic acid or anhydrides thereof.

**8.** The thermoplastic molding composition according to claims 1 to 6, comprising, as copolymer II, an ethylene-(meth)acrylic acid copolymer which has been neutralized to an extent of up to 72% with zinc.

**9.** The use of thermoplastic molding compositions according to claims 1 to 8 for producing moldings of any type, in particular blow moldings.

**10.** A molding obtainable from the thermoplastic molding compositions according to claims 1 to 8.

## Revendications

**1.** Matériaux de moulage thermoplastiques, contenant:

A) 10 à 94 % en poids d’un polyamide,
B) 1 à 30 % en poids d’un modificateur de la résistance aux impacts constitué par un copolymère I de

$B_1$) 35 à 89,9 % en poids d’éthylène,

$B_2$) 10 à 60 % en poids de 1-octène ou de 1-butène ou de propylène ou leurs mélanges, et

$B_3$) 0,05 à 5 % en poids de monomères fonctionnels, les monomères fonctionnels étant choisis dans le groupe constitué par les groupes acide carboxylique, anhydride d'acide carboxylique, ester d'acide carboxylique, amide d'acide carboxylique, imide d'acide carboxylique, amino, hydroxyle, époxyde, uréthane ou oxazoline ou leurs mélanges,

ou par un copolymère II de

$B_1$) 50 à 98 % en poids d'éthylène

$B_4$) 2 à 50 % en poids d'acide acrylique ou d'acide méthacrylique ou de (méth)acrylate contenant 1 à 18 atomes C, ou

$B_5$) 0 à 20 % en poids de monomères fonctionnels choisis dans le groupe constitué par les groupes anhydride d'acide carboxylique ou époxyde ou leurs mélanges,

ou leurs mélanges,

C) 0,1 à 10 % en poids d'un copolymère de

$C_1$) 50 à 95 % en poids de styrène ou de styrènes substitués de formule générale I ou leurs mélanges,

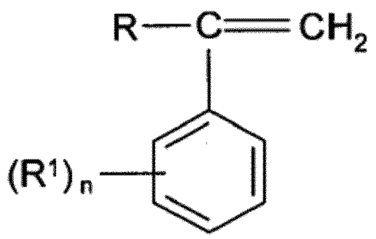

I

dans laquelle R représente un radical alkyle de 1 à 8 atomes C ou un atome d'hydrogène, et $R^1$ représente un radical alkyle de 1 à 8 atomes C, et n a la valeur 0, 1, 2 ou 3, et

$C_2$) 5 à 50 % en poids d'une ou de plusieurs unités structurales dérivées d'anhydrides d'acides dicarboxyliques,

D) 0,001 à 20 % en poids de poudre de fer,

E) 0,05 à 3 % en poids d'un stabilisateur contenant du cuivre,

F) 100 ppm à 5 % en poids de sels de métaux alcalins ou de sels de métaux alcalino-terreux d'acides oxygénés de phosphore ou leurs mélanges,

G) 0 à 2 % en poids d'un homopolymère ou copolymère de polyéthylène-imine,

H) 0 à 60 % en poids d'autres additifs,

la somme des pourcentages en poids d'A) à H) étant de 100 %.

**2.** Matériaux de moulage thermoplastiques selon la revendication 1, contenant :

A) 20 à 94 % en poids,
B) 1 à 30 % en poids,
C) 0,1 à 10 % en poids,
D) 0,001 à 20 % en poids,
E) 0,05 à 3 % en poids,
F) 100 ppm à 5 % en poids,
G) 0,01 à 2 % en poids,
H) 0 à 50 % en poids,

la somme des pourcentages en poids d'A) à H) étant de 100 %.

**3.** Matériaux de moulage thermoplastiques selon les revendications 1 ou 2, contenant en tant que composant C) un copolymère de styrène ($C_1$) et d'anhydride de l'acide maléique ($C_2$).

**4.** Matériaux de moulage thermoplastiques selon les revendications 1 à 3, contenant en tant que composant C) un copolymère ayant un rapport entre les unités $C_1$:$C_2$ de 1:1 à 8:1.

**5.** Matériaux de moulage thermoplastiques selon les revendications 1 à 4, dans lesquels le composant D) présente une teneur en C de 0,01 à 1,2 g/100 g conformément à ASTM E 1019.

**6.** Matériaux de moulage thermoplastiques selon les revendications 1 à 5, dans lesquels comme composant F) est formé par de l'hypophosphite de Na.

**7.** Matériaux de moulage thermoplastiques selon les revendications 1 à 6, contenant un copolymère I avec $B_3$) 0,05 à 5 % en poids d'un acide mono- ou dicarboxylique éthyléniquement insaturé ou ses anhydrides.

**8.** Matériaux de moulage thermoplastiques selon les revendications 1 à 6, contenant en tant que copolymère II un copolymère d'éthylène-acide (méth)acrylique, qui est neutralisé jusqu'à 72 % avec du zinc.

**9.** Utilisation de matériaux de moulage thermoplastiques selon les revendications 1 à 8 pour la fabrication de corps moulés de tout type, notamment de corps moulés par soufflage.

**10.** Corps moulé, pouvant être obtenu à partir des matériaux de moulage thermoplastiques selon les revendications 1 à 8.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2602449 A
- JP 9221590 A
- JP 2000086889 A
- JP 2000256123 A
- WO 2006074912 A
- WO 2005007727 A
- WO 2011051123 A
- WO 2011051121 A
- WO 2010076145 A
- US 4966941 A
- EP 295906 A
- CA 1323953
- WO 9520011 A
- US 5122570 A
- DE 10042176 A
- DE 10313681 A
- EP 1198491 A
- EP 922065 A
- EP 38094 A
- EP 38582 A
- EP 39524 A
- EP 299444 A
- EP 1994075 A
- EP 129195 A
- EP 129196 A
- US 5272236 A
- DE 19931720 A
- US 4144123 A
- EP 895521 A
- EP 25515 A
- EP 675914 A
- DE 2702661 A
- US 4360617 A


### In der Beschreibung aufgeführte Nicht-Patentliteratur


- **BARUAH S.D. ; LASKAR N.C.** Styrene-maleic anhydride copolymers: Synthesis characterization, and thermal properties. *J. Appl. Polymer Science,* 1996, vol. 60, 649-656
- **VORA R.A. et al.** Synthesis and characterization of styrene-maleic anhydride copolymers. *J. Polym. Mater.,* 1995, vol. 12, 111-120